(19) Europäisches Patentamt
European Patent Office
Office européen des brevets

(11) **EP 3 717 433 B1**

(12) **FASCICULE DE BREVET EUROPEEN**

(45) Date de publication et mention
de la délivrance du brevet:
**07.06.2023   Bulletin 2023/23**

(21) Numéro de dépôt: **18827197.7**

(22) Date de dépôt: **28.11.2018**

(51) Classification Internationale des Brevets (IPC):
**C03C 17/36** $^{(2006.01)}$   **C03C 17/38** $^{(2006.01)}$
**G02B 5/02** $^{(2006.01)}$   **C23C 14/06** $^{(2006.01)}$

(52) Classification Coopérative des Brevets (CPC):
**C03C 17/3626; C03C 17/36; C03C 17/3644;
C03C 17/3652; C03C 17/366; C03C 17/38;
G02B 5/0221; G02B 5/0263;** C03C 17/3618

(86) Numéro de dépôt international:
**PCT/FR2018/053031**

(87) Numéro de publication internationale:
**WO 2019/106295 (06.06.2019 Gazette 2019/23)**

(54) **VITRAGE FONCTIONNEL MUNI D'UN FILM PROTECTEUR PERMANENT**

FUNKTIONSVERGLASUNG AUSGESTATTET MIT EINEM PERMANENTEM SCHUTZFILM

FUNCTIONAL GLAZING EQUIPPED WITH A PERMANENT PROTECTIVE FILM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **30.11.2017   FR 1761458**

(43) Date de publication de la demande:
**07.10.2020   Bulletin 2020/41**

(73) Titulaire: **SAINT-GOBAIN GLASS FRANCE**
**92400 Courbevoie (FR)**

(72) Inventeurs:
• **DEVYS, Lucie**
**75013 Paris (FR)**
• **WANAKULE, Nisita**
**75019 Paris (FR)**
• **SCHIAVONI, Michele**
**75014 Paris (FR)**

(74) Mandataire: **Saint-Gobain Recherche**
**B.P. 135**
**39, quai Lucien Lefranc**
**93303 Aubervilliers Cedex (FR)**

(56) Documents cités:
**EP-A2- 0 718 250      WO-A1-2014/009667
WO-A1-2016/097599    US-A1- 2002 163 681
US-B2- 7 541 087**

**Description**

L'invention concerne un article comprenant un substrat par exemple verrier, notamment un vitrage comprenant un empilement de couches minces conférant audit article une fonctionnalité, notamment du type réfléchissant le rayonnement infrarouge IR, du type solaire (proche IR) ou thermique (IR lointain). D'autres fonctionnalités peuvent également être envisagées selon la présente invention, notamment pour conférer à l'article selon l'invention certaines colorations ou plus généralement pour conférer certaines propriétés optiques recherchées pour le vitrage.

Un article selon l'invention tel qu'un vitrage est plus particulièrement adapté pour équiper des bâtiments, même s'il n'y est pas limité et que notamment on puisse également l'utiliser dans le domaine automobile, en particulier comme vitre latérale, toit ouvrant ou encore lunette arrière. Il est également apte à être utilisé comme vitrine ou porte de réfrigérateur à fonction antibuée (anticondensation), notamment pour équiper les présentoirs des produits congelés en supermarché.

De façon connue, dans le cas d'un article verrier ayant des propriétés de réflexion des infra-rouges, en sélectionnant la nature chimique, les épaisseurs et la succession des couches minces constituant l'empilement, on peut agir de façon significative sur la quantité d'énergie du rayonnement solaire entrant ou sortant d'un local ou d'un habitacle. En particulier, un tel vitrage permet d'éviter à l'intérieur de ceux-ci un échauffement excessif en été et contribue ainsi à limiter la consommation d'énergie nécessaire à leur climatisation. Selon un autre aspect possible de l'invention, celle-ci se rapporte également à des vitrages d'isolation thermique, souvent appelés vitrages low-e ou basse émissivité dans le domaine, plus particulièrement destinés à l'isolation thermique des bâtiments ou véhicules. Les empilements low-e peuvent également avantageusement être utilisés dans les parties vitrées des appareils réfrigérés du type vitrine ou porte de réfrigérateur pour leur fonctionnalité d'isolation thermique.

Ces vitrages à couches sont soumis à un certain nombre de contraintes : en ce qui concerne les vitrages, les couches employées doivent être, en premier lieu, suffisamment filtrantes vis-à-vis du rayonnement solaire, c'est-à-dire qu'elles doivent permettre l'isolation thermique en laissant toutefois passer au moins une partie de la lumière, telle que mesurée par la transmission lumineuse $T_L$. En outre, ces performances thermiques doivent préserver l'aspect optique, l'esthétisme du vitrage : il est ainsi souhaitable de pouvoir moduler le niveau de transmission lumineuse du substrat, tout en gardant une couleur jugée esthétique et de préférence sensiblement neutre et uniforme, notamment en transmission mais de préférence également ou en réflexion extérieure et/ou intérieure. En particulier, l'apparition de zones d'iridescence à la surface de la surface vitrée n'est pas acceptable d'un point de vue commercial.

Selon un autre aspect essentiel, ces couches doivent aussi être suffisamment durables, et cela d'autant plus si, dans le vitrage une fois monté, elles sont positionnées sur l'une des faces externes (intérieure ou extérieure) du vitrage (par opposition aux faces internes, tournées vers la lame de gaz intercalaire d'un double vitrage par exemple ou encore vers le feuillet thermoplastique d'un vitrage feuilleté).

On connait aujourd'hui de très nombreux empilements dits de « contrôle thermique », c'est-à-dire permettant de réguler le flux de chaleur entrant ou sortant des surfaces vitrées équipant le bâtiment ou de l'habitacle.

Ils sont regroupés sous la désignation de vitrage d'isolation thermique. Ils sont commercialisés et utilisés essentiellement selon deux catégories :

- soit pour assurer essentiellement une protection de l'habitation du rayonnement solaire et en éviter une surchauffe, de tels vitrages étant qualifiés dans le métier de vitrages antisolaires,
- soit pour assurer essentiellement une isolation thermique de l'habitation et éviter les déperditions de chaleur, ces vitrages étant alors qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend ainsi un vitrage muni d'au moins une couche fonctionnelle lui conférant une déperdition énergétique diminuée, ladite couche présentant des propriétés de réflexion du rayonnement IR thermique (aussi appelé infrarouge moyen) compris entre 3 et 50 micromètres. Dans certains pays, les normes impliquent que les vitrages présentent des propriétés à la fois antisolaire et d'isolation thermique.

De façon bien connue, par exemple décrite dans la publication de référence « Les techniques de l'ingénieur, Vitrage à isolation thermique renforcée, C3635 (2004)», une telle propriété de réflexion est directement fonction de l'émissivité de la face du vitrage munie de l'empilement comprenant la ou les couches fonctionnelles.

D'une manière générale, toutes les caractéristiques lumineuses et thermiques présentées dans la présente description sont obtenues selon les principes et méthodes décrits dans les normes internationales ISO 9050 (2003) et ISO 10292 (1994) ou encore NF EN 12898 : 2001, se rapportant à la détermination des caractéristiques lumineuses et énergétiques des vitrages utilisés dans le verre pour la construction.

Associés au substrat verrier, ces revêtements doivent également de préférence être esthétiquement plaisants, c'est-à-dire que le vitrage muni de son empilement doit présenter une colorimétrie, en transmission comme en réflexion suffisamment neutre pour ne pas incommoder les utilisateurs, ou alternativement une teinte légèrement bleue ou verte, notamment dans le domaine du bâtiment.

Les empilements les plus performants commercialisés à l'heure actuelle pour résoudre les problèmes précédents incorporent une couche fonctionnelle (c'est-à-dire responsable des propriétés de réflexion du rayonnement IR) métallique en métal précieux du type or ou argent ou encore en cuivre (ou en un alliage entre ces métaux), en particulier en argent, fonctionnant essentiellement sur le mode de la réflexion d'une majeure partie du rayonnement IR (infrarouge) incident. Ces empilements peuvent utilisés avantageusement en tant que vitrages du type bas émissifs (ou low-e en anglais) pour l'isolation thermique des bâtiments mais peuvent également, de façon plus limités, être utilisés comme vitrage de contrôle solaire.

On donne les définitions suivantes :

Par rayonnement infrarouge, on entend le rayonnement IR proche ou solaire de longueur d'onde comprise entre 0,78 et 3 micromètres et le rayonnement IR thermique (ou moyen) de longueur d'onde comprise entre 3 et 50 micromètres.

Un vitrage antisolaire (ou de contrôle solaire) a pour fonction de réfléchir une majeure partie du proche IR issu du rayonnement solaire pour éviter le réchauffement de l'habitation ou de l'habitacle.

Un vitrage de contrôle thermique a pour fonction de réfléchir une majeure partie de l'IR thermique pour éviter la déperdition de chaleur de l'habitation/de l'habitacle vers l'extérieur.

Ces couches sont cependant très sensibles aux agents extérieurs tels que l'humidité et sont donc exclusivement utilisées dans des doubles vitrages, en face 2 ou 3 de celui-ci, pour être protégées de l'humidité. Il est admis aujourd'hui qu'il n'est pas possible de déposer de telles couches sur des vitrages simples (aussi appelés monolithiques) ou encore sur la face la plus extérieure d'un vitrage multiple (appelée face 1 par convention) ou encore sur la face intérieure d'un vitrage multiple (appelée face 4 par convention pour un double vitrage) car celles-ci se dégradent très rapidement et s'oxyde sous l'action de l'humidité extérieure ou même présente en intérieur. De telles couches ne sont donc pas durables en face externe et doivent nécessairement être déposées en face interne d'un vitrage multiple. Même si elle n'est pas limitée à de telles couches, l'un des objets principaux de la présente invention est de proposer des vitrages munis d'empilements de couches agissant sur la quantité de chaleur traversant le vitrage et dont au moins l'une est en cuivre ou en métal précieux Ag ou Au), plus particulièrement en argent.

Dans le but de permettre le dépôt d'un empilement comprenant au moins une couche en argent sur une face extérieure (interne ou externe) il a déjà été proposé dans la littérature de le protéger par un film protecteur, notamment en matière plastique polymère, qui recouvre ledit empilement après son dépôt. On peut citer par exemple les demandes suivantes :

La demande WO 2013089185 décrit une configuration selon laquelle on utilise un polymère du type polyacrylonitrile (PAN) ou polymethacrylonitrile (PMAN), déposé sur un empilement réfléchissant les IR, lui-même étant disposé sur un substrat. Il est indiqué que le polymère permet de protéger l'empilement en augmentant sa résistance à l'abrasion et sa résistance mécanique, notamment lorsqu'il est soumis à des contraintes nées de variations thermiques extérieures.

La demande de brevet EP2685294 décrit alternativement l'utilisation d'un film plastique protecteur en polycyclooléfine dans le but de rendre un empilement externe réfléchissant les IR résistant mécaniquement.

La demande de brevet Française FR2414114 décrit l'utilisation comme couche protectrice d'un polymère polyéthylène (PE), polypropylène (PP) ou polyacrylonitrile (PAN).

Les demandes de brevets WO2016/097599 et WO2017/103465 de la société déposante décrivent d'autres types possibles de revêtements du type PVDC ou encore du type styrène-butadiène.

Le choix du matériau polymère protecteur, selon ces documents de l'art, est guidé par la qualité de la protection mécanique et la résistance chimique, notamment à la corrosion, qu'il confère à l'empilement.

Cependant, si la mise en oeuvre de tels revêtements polymères permet de résoudre efficacement le problème de la durabilité chimique de l'article verrier, il apparaît cependant que la combinaison de tels films, recouvrant et protégeant des empilements de couches minces du type décrit précédemment, conduit à une esthétique globale de l'article verrier qui ne permet pas sa commercialisation, en raison de la présence de zones iridescentes à la surface de l'article. Un tel phénomène semble être issu d'interférences optiques entre les différentes couches minces minérales et le film organique disposés au-dessus de la surface de verre.

Ce même phénomène est observé si le substrat n'est pas verrier mais en matière plastique dure, par exemple en PMMA ou en polycarbonate. Par plastique dur, on entend justement au sens de la présente invention toute matière plastique suffisamment résistante mécaniquement pour pouvoir être utilisée en tant qu'élément vitré (substrat) d'un vitrage tel qu'une fenêtre, un vitrage automobile ou une vitrine.

Selon certaines autres configurations possibles selon l'invention, le substrat sur lequel est déposé la couche ou l'empilement de couches peut ne pas être rigide mais souple, par exemple sous la forme d'un film de PET qui lui-même peut être rapporté sur un substrat verrier ou en PPMA ou en polycarbonate.

La présente invention a ainsi pour objet de proposer un article notamment utilisable pour le contrôle thermique, notamment un vitrage antisolaire ou un vitrage dit de basse émissivité, ou encore un vitrage pour vitrine ou porte de réfrigérateur, incorporant notamment une couche métallique telle que précédemment citée dans empilement fonctionnel, en particulier dans un empilement low-e ou antisolaire, qui peut être disposé sur une des faces externes dudit vitrage tout en étant durable dans le temps, et qui ne présente pas de phénomène d'iridescence à sa surface.

La présente invention se rapporte en particulier aux vitrages de contrôle thermique dans leur ensemble constitué par ou incorporant un tel article, c'est-à-dire aussi bien aux vitrages antisolaires qu'aux vitrages d'isolation thermique.

Plus précisément, la présente invention se rapporte dans sa forme la plus générale à un article pour vitrage, comprenant un substrat en verre ou en matière organique, de préférence en plastique notamment rigide, sur la surface duquel sont déposés :

- une couche ou un empilement de couches conférant audit article une fonctionnalité, notamment des propriétés antisolaires, d'isolation thermique ou anticondensation, d'épaisseur totale comprise entre 5 nanomètres et 400 nanomètres, de préférence d'épaisseur totale comprise entre 10 et 300 nanomètres ou encore d'épaisseur totale comprise entre 20 et 250 nanomètres,
- un film organique recouvrant ladite couche ou ledit empilement de couches, l'épaisseur du film polymère étant comprise entre 300 nanomètres et 10 micromètres, de préférence entre 500 nanomètres et 5 micromètres et de manière très préférée entre 1 et 5 micromètres.

Selon l'invention, un élément de texturation est présent sous ladite couche ou ledit empilement de couches, la rugosité de la surface de l'élément de texturation étant telle que :

- l'écart moyen arithmétique Ra est compris entre 50 nm et 2 micromètres, bornes incluses, de préférence est compris entre 100 nm et 1 micromètre, bornes incluses, et de manière très préférée est compris entre 150 nm et 300 nm, bornes incluses,
- la longueur de base RSm est comprise entre 5 micromètres et 300 micromètres, bornes incluses, et de préférence est comprise entre 10 micromètres et 200 micromètres, bornes incluses.

Les paramètres Ra et RSm sont définis conformément à la norme internationale ISO4287 (1997).

Selon l'invention et conformément à la norme ci-dessus, on définit le $R_a$ comme la moyenne arithmétique des valeurs absolues des ordonnées z(x) mesurées sur un profil de longueur 1 :

$$R_a = \frac{1}{l}\int_0^l |z(x)| dx$$

On rappelle que le $R_{Sm}$ (période moyenne ou pas moyen) d'un profil (c'est-à-dire selon un segment de droite) d'une surface est défini par la relation :

$$R_{sm} = \frac{1}{n}\sum_{i=1}^{i=n} Si = \frac{S_1 + S_2 + \dots + S_n}{n}$$

dans laquelle Si est la distance entre deux passages par zéro (ligne médiane) et montants, n+1 étant le nombre de passage par zéro en montant dans le profil considéré. Ce paramètre $R_{Sm}$ est représentatif de la distance entre pics, c'est-à-dire du pas de la texture parallèlement au plan général de la feuille. Les valeurs de $R_{Sm}$ et de $R_a$ sont données après utilisation de filtres gaussiens avec coupures (cut-off en anglais) à 2,5 $\mu$m et 0,8 mm (suppression des périodes inférieures à 2,5 $\mu$m et supérieures à 0,8 mm). Les mesures de $R_{Sm}$ et de de $R_a$ sont réalisées sur une distance d'au moins 4 mm.

Dans la présente demande, les paramètres de rugosité sont obtenus de la façon suivante. Des surfaces représentatives d'environ (10 à 15) x (10 à 15) mm$^2$ ont été analysées sur chaque échantillon. De préférence, on choisit trois positions différentes pour chaque échantillon. Ces images sont obtenues par profilométrie interférentielle à l'aide du profilomètre Zygo NewviewTM avec un grossissement x 20. Des profils de longueur de 4 mm sont extraits à partir de ces mesures. Les données sont ensuite traitées par le logiciel Mountain MapMountainsMap ®.

Les paramètres de rugosité de surface tridimensionnels ont été calculés en utilisant une longueur d'analyse combinée à un filtre Gaussien passe bas appropriés (ISO 13565-116610-21 pour les profils). La longueur d'analyse et le choix filtre passe bas sont choisis judicieusement afin de distinguer les paramètres d'ondulation des paramètres de rugosité.

Selon un autre paramètre très préféré de mise en oeuvre de la présente invention, les indices de réfraction du substrat et du film organique, mesurés à 550 nm sont sensiblement identiques. Par sensiblement identiques, on entend que la différence entre les deux indices de réfraction est inférieure à 0,2, de préférence est inférieure à 0, 15, ou même inférieure à 0,1 et de manière très préférée est inférieure à 0,05.

De manière très préférée, le film organique de protection est transparent aux IR.

Selon l'invention, le dépôt du film protecteur n'entraîne de préférence pas ou sensiblement pas de modifications de la période de la texturation de l'élément de texturation, la texturation à la surface de l'article selon l'invention pouvant par exemple être définie par les mêmes gammes RSm que précédemment décrits.

En revanche, le film protecteur peut préférentiellement limiter l'amplitude Ra de l'article selon l'invention, par exemple de telle façon que le Ra de l'article est inférieur à 50% du Ra de l'élément de texturation, de préférence le Ra de l'article est inférieur à 30% du Ra de l'élément de texturation, de préférence encore le Ra de l'article est inférieur à 15% du Ra de l'élément de texturation, ou même le Ra de l'article est inférieur à 5% du Ra de l'élément de texturation. Idéalement la surface de l'article est sensiblement lisse. De préférence, le Ra de l'article est donc inférieur à 50 nm, de préférence encore est inférieur à 30 nm et de manière très préférée est inférieur à 20 nm, voire inférieur à 10 nm.

Selon des modes préférés de réalisation de la présente invention, qui peuvent bien évidemment le cas échéant être combinés entre eux :

- Les indices de réfraction du substrat et du film organique, mesurés à 550 nm sont sensiblement identiques.
- Le film organique est un polymère.
- Ledit élément de texturation consiste en une texturation de la surface du substrat verrier.
- Ledit élément de texturation consiste en une couche d'un matériau organique, notamment polymère, disposée entre la surface du substrat verrier et la couche ou l'empilement de couches, la surface de ladite couche organique au contact de ladite couche ou de l'empilement de couches étant texturée.
- Ledit élément de texturation est en verre inorganique, en verre organique, en matériau sol-gel, en polymère ou en verre fritté.
- Ladite couche de polymère disposée entre la surface du substrat verrier et la couche ou l'empilement de couches est en PMMA (poly(méthacrylate de méthyle)) ou en PDMS (polydiméthylsiloxane).
- Le film organique est choisi parmi un polymère choisi dans le groupe des polyacrylonitrile (PAN), polymethacrylonitrile (PMAN), polycyclooléfine, polyéthylène (PE), polypropylène (PP) ou polyacrylonitrile, polyvinylidene chloride (PVDC) ou encore styrène-butadiène (PSB, ou polysilazanes).
- Le film organique est une couche organique sol-gel notamment obtenue par polymérisation d'une solution de TEOS, de MTEOS.
- L'empilement de couches minces réfléchissant le rayonnement infrarouge comprend au moins une couche métallique choisie parmi l'argent, le cuivre, l'or et leurs alliages.
- L'empilement de couches minces réfléchissant le rayonnement infrarouge comprend comme couche supérieure une couche diélectrique d'oxyde, de nitrure ou d'oxynitrure, de préférence d'oxyde, sur laquelle est déposé directement le film organique protecteur.
- Le substrat est en verre.
- La texturation est obtenue par dépolissage de la surface du substrat verrier, notamment par un procédé de dépolissage acide (acid etching), dépolissage basique (basique etching) ou encore par sablage.
- Le substrat est en matière plastique, en particulier est en une matière plastique choisie dans le groupe constitué par le PMMA, le polycarbonate, le PET.
- La texturation est obtenue par application sur la surface du substrat d'une couche d'un matériau texturé, notamment par embossage ou par auto texturation.
- Le Ra de la surface dudit article est inférieur à 50% du Ra de la surface de l'élément de texturation.
- Le Ra de la surface de l'article est inférieur à 50 nm.

L'invention se rapporte également à un vitrage simple, incorporant un article tel que décrit précédemment.

L'invention se rapport en outre à un virage multiple, comprenant un article tel que décrit précédemment, dans lequel l'empilement de couches minces, recouvert dudit film organique, est disposé vers une face externe dudit vitrage.

De préférence, dans un tel vitrage multiple, la face interne de l'article comprend un deuxième empilement de couches minces réfléchissant le rayonnement infrarouge disposée vers l'intérieur du vitrage multiple.

Egalement, l'invention se rapporte à une utilisation d'un substrat ou d'un vitrage tel que décrit précédemment en tant que vitrage à fonction anticondensation ou encore à une utilisation d'un substrat ou d'un vitrage tel que décrit précédemment en tant que vitrage à fonction antisolaire ou de contrôle thermique.

Selon une première configuration d'un vitrage selon l'invention, le vitrage est simple, c'est-à-dire qu'il comprend un unique substrat verrier sur lequel est disposé un empilement agissant sur le rayonnement infrarouge incorporant une succession de couches minces dont une couche d'argent, d'épaisseur par exemple de l'ordre de 5 à 20 nanomètres, réfléchissant les infrarouges. La couche d'argent comprend au-dessus et en dessous dans l'empilement des couches de matériau diélectrique d'oxydes ou de nitrure de silicium. Sur l'empilement, on dépose un film organique de préférence du type polymère. Le film polymère permet d'exposer l'empilement sur une face externe (intérieur ou extérieur) du vitrage et d'en garantir sa durabilité. Dans un tel vitrage utilisé par exemple comme fenêtre pour le bâtiment, la face sur laquelle sont déposés l'empilement et le film protecteur est par exemple tourné vers l'intérieur du bâtiment. Cette configuration permet l'utilisation du vitrage simple comme vitrage antisolaire ou encore comme vitrage Low-e.

Selon une seconde configuration d'un vitrage selon l'invention, le vitrage est double ou triple, c'est-à-dire qu'il comprend deux ou trois substrats verriers séparés par une lame de gaz ou encore un feuillet thermoplastique du type PVB. Sur une face externe du vitrage multiple est disposé l'empilement agissant sur le rayonnement infrarouge. Sur l'empilement, on dépose un film organique, en particulier polymère. Le film polymère permet d'exposer l'empilement sur une face externe (vers intérieur ou vers l'extérieur) du vitrage et d'en garantir sa durabilité.

Selon une possible réalisation d'un tel vitrage, par exemple comme fenêtre pour le bâtiment ou comme paroi d'un compartiment réfrigéré, l'empilement recouvert du film est présent sur la face 1 du vitrage multiple, le film protecteur étant tourné vers l'extérieur du bâtiment (conventionnellement, on numérote les faces des substrats verriers d'un vitrage simple ou multiple depuis l'extérieur vers l'intérieur de l'habitacle/du local qu'il équipe) ou du compartiment. Cette configuration permet de limiter la condensation sur ladite face extérieure d'un vitrage multiple, en particulier les triples vitrages très isolants.

Selon une autre réalisation d'un tel vitrage comme fenêtre pour le bâtiment ou comme paroi d'un compartiment réfrigéré, l'empilement recouvert du film est disposé sur la face 4 du double vitrage ou la face 6 d'un triple vitrage, de telle façon que la face sur laquelle sont déposés l'empilement et le film protecteur est celle tournée vers l'intérieur du bâtiment ou du compartiment. Cette configuration permet l'utilisation du vitrage multiple comme vitrage anti-solaire ou d'isolation thermique (Low-e). Une configuration particulièrement intéressante d'un double vitrage selon ce mode consiste en une combinaison de ce premier empilement déposé en face 4 avec un autre empilement réfléchissant les infrarouges, positionné cette fois sur la face 2 ou la face 3 du double vitrage.

Bien entendu, il serait également possible de disposer l'empilement et le film sur les deux faces extérieures d'un article selon l'invention. Une telle configuration utilisée dans un vitrage simple ou multiple permettrait par exemple d'obtenir un vitrage cumulant les fonctions low-e, antisolaire et/ou anticondensation.

Si l'application plus particulièrement décrite précédemment est le vitrage pour le bâtiment, il est clair que d'autres applications sont envisageables, notamment dans les vitrages de véhicules, comme les verres latéraux, le toit-auto, la lunette arrière ou encore les vitrines ou les portes vitrées de congélateurs.

Les avantages de la présente invention sont illustrés à l'aide des exemples non limitatifs qui suivent.

## EXEMPLE DE REFERENCE :

On utilise un substrat en verre clair de 4 mm d'épaisseur de type Planilux commercialisé par la société Saint-Gobain Glass France, d'indice de réfraction 1,52 à 550 nm.

Sur le substrat, sans étape de texturation préliminaire, un empilement de couches est déposé par les techniques bien connues de pulvérisation cathodique assistée par champ magnétique. L'empilement déposé est conforme à l'exemple 4 de la demande WO2007/ 101964 A1 et comprend une couche d'argent de 10 nm d'épaisseur auquel on se référera pour plus de précisions.

Sur cet empilement de couche conférant à l'article verrier une fonctionnalité de réflexion des infrarouges, on dépose un film de polychlorure de vinylidène (PVDC d'indice de réfraction n=1,65) de 3 micromètres selon le procédé de dépôt par voie liquide décrit ci-après:

on réalise le dépôt d'un film de PVDC à la surface du substrat par les techniques d'enduction centrifuge (ou spin-coating selon le terme anglosaxon) en utilisant une résine de polychlorure de vinylidène Ixan$^®$ SGA-1 commercialisée par la société Solvay et préalablement dissous dans de l'acétate d'éthyle (solvant). On ajuste dans le dispositif de centrifugation (spinner) la vitesse angulaire et la concentration de la résine dans le solvant pour l'obtention d'une couche d'épaisseur de l'ordre de 3 micromètres.

On obtient ainsi un premier vitrage de référence.

## EXEMPLE SELON L'INVENTION :

Dans cet exemple, on reprend à l'identique le protocole de réalisation du vitrage décrit dans l'exemple de référence qui précède mais on pratique en sus à la surface du verre un dépolissage à l'acide selon les techniques bien connues de l'art.

Le dépolissage est opéré dans des conditions permettant d'obtenir une texturation de la surface du verre telle que la valeur Ra est de l'ordre de 200 nanomètres pour une valeur RSm est de l'ordre de 70 micromètres.

Les images permettant de mesurer la rugosité sont obtenues par profilométrie interférentielle à l'aide du profilomètre Zygo NewviewTM avec un grossissement x 20. Les données sont ensuite traitées par le logiciel Mountain MapMountainsMap®, selon les méthodes et principes déjà décrits précédemment.

Les échantillons selon les exemples de référence et selon l'invention sont ensuite soumis aux tests suivants pour mesurer leurs performances optiques, énergétiques ainsi que leur durabilité.

Les propriétés optiques, énergétiques et la durabilité des différents vitrages sont mesurées selon les critères suivants :

- Transmission $T_L$ : transmission lumineuse en % selon l'illuminant $D_{65}$,, selon les critères définis dans la norme internationale ISO 9050 : 2003.
- Réflexion lumineuse $R_{Lc}$ : transmission lumineuse en % selon l'illuminant $D_{65}$, coté couche, selon les critères définis dans la norme internationale ISO 9050 : 2003.
- Emissivité normale ($\varepsilon_n$): elle est calculée selon les critères définis dans la norme internationale NF EN 12898 : 2001.
- Flou : Par flou, mesuré en pourcentage, il est entendu au sens de la présente invention la perte par diffusion de la lumière, c'est-à-dire de façon classique le rapport entre la partie diffusée de la lumière (fraction diffuse ou $T_d$) sur la lumière directement transmise au travers du vitrage ($T_L$), généralement exprimée en pourcentages. La transmission diffuse mesure ainsi la fraction lumière diffusée par les couches déposées à la surface du substrat de verre. Le flou peut classiquement être mesuré par des techniques de spectroscopie, l'intégration sur tout le domaine du visible (380-780 nm) permettant la détermination de la transmission normale $T_L$ et de la transmission diffuse $T_d$. Une telle mesure peut également être obtenue par l'utilisation d'un Hazemeter. On considère qu'un vitrage reste transparent si son flou reste inférieur à 10 % et de préférence est inférieur à 5% ou même inférieur à 1% lors d'une mesure avec un Hazemeter. L'appareil utilisé est un dispositif « Haze-Gard® » commercialisé par la société BYK-Gardner.
- Clarté : La clarté est également mesurée grâce au Hazemeter : Un rayon lumineux frappe l'échantillon et pénètre dans la sphère intégrante de l'appareil. Un capteur annulaire monté à l'orifice de sortie de la sphère détecte la lumière diffusée aux plus faibles angles définit comme la clarté.
- Résistance par carré $\Omega/\square$) : la résistance par carré est mesurée classiquement, par exemple tel que décrit dans la publication de référence « Les techniques de l'ingénieur, Vitrage à isolation thermique renforcée, C3635 (2004). »
- Test $SO_2$ : il s'agit d'un premier test de durabilité de l'empilement protégé par le film aux agressions acides (vapeur de $SO_2$). Le test pratiqué est conforme à celui décrit dans la norme EN1096-2 :2001, annexe C. On vérifie d'abord la conformité du vitrage avec la norme, notamment sur un plan visuel. On mesure également la variation d'émissivité ($\Delta\varepsilon$) et de la transmission lumineuse ($\Delta$TL) après le test.

Dans le tableau 1 ci-après on a reporté l'ensemble des résultats obtenus :

Tableau 1

| | Epaisseur du film | RLc | | | TL | Clarté | Flou | εn | $R_\square$ | Variation après Test $SO_2$ (5 jours) | | |
| | | L* | a* | b* | | | | | | | | |
|---|---|---|---|---|---|---|---|---|---|---|---|---|
| Unités | μm | % | % | % | % | % | % | % | Ohms carré | $\Delta\varepsilon$ | $\Delta T_L$ | aspect visuel |
| Référence | 3 | 57 | 5,2 | 11,6 | 68 | 99,8 | 0,2 | 26 | 2,93 | 0,9 | 0,2 | OK |
| Exemple selon l'invention | 3 | 57 | 5,4 | 12,7 | 67 | 91,3 | 0,95 | 30 | 2,95 | 0,9 | 0,1 | OK |

Les résultats reportés dans le tableau 1 précédant montrent que les performances optiques, colorimétriques et énergétiques des échantillons selon les exemples de référence et selon l'invention sont sensiblement identiques.

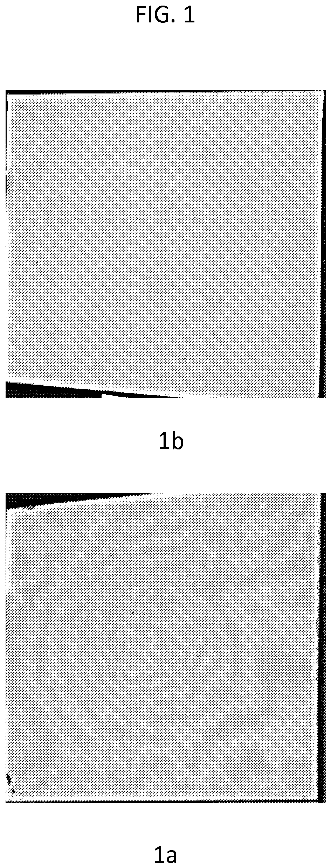

Les photographies ci-jointes (figure 1) montrent l'aspect visuel des deux échantillons : On voit que le vitrage de référence (1a) présente une iridescence de forme concentrique qui ne s'observe pas sur le vitrage selon l'invention (1b), c'est-à-dire présentant une texturation de surface conforme à l'objet des revendications qui suivent.

## Revendications

**1.** Article pour vitrage, comprenant un substrat en verre ou en matière organique sur la surface duquel sont déposés :

- une couche ou un empilement de couches conférant audit article une fonctionnalité, notamment des propriétés antisolaires, d'isolation thermique ou anticondensation, d'épaisseur totale comprise entre 5 nanomètres et 400 nanomètres,
- un film organique recouvrant ladite couche ou ledit empilement de couches, l'épaisseur du film polymère étant comprise entre 300 nanomètres et 10 micromètres,
**caractérisé en ce qu'**un élément de texturation est présent sous ladite couche ou ledit empilement de couches, la rugosité de la surface de l'élément de texturation étant telle que :
- l'écart moyen arithmétique Ra est compris entre 50 nm et 2 micromètres, bornes incluses,
- la longueur de base RSm est comprise entre 5 micromètres et 300 micromètres, bornes incluses ;

les paramètres Ra et RSm étant définis conformément à la norme internationale ISO 4287 (1997).

2. Article selon la revendication précédente, dans lequel les indices de réfraction du substrat et du film organique, mesurés à 550 nm sont sensiblement identiques.

3. Article selon l'une des revendications précédentes, dans lequel le film organique est un polymère.

4. Article selon l'une des revendications précédentes, dans lequel ledit élément de texturation consiste en une texturation de la surface du substrat verrier.

5. Article selon l'une des revendications précédentes, dans lequel ledit élément de texturation consiste en une couche d'un matériau organique, notamment polymère, disposée entre la surface du substrat verrier et la couche ou l'empilement de couches, la surface de ladite couche organique au contact de ladite couche ou de l'empilement de couches étant texturée.

6. Article selon l'une des revendications précédentes, dans lequel ledit élément de texturation est en verre inorganique, en verre organique, en matériau sol-gel, en polymère ou en verre fritté.

7. Article selon la revendication précédente, dans lequel ladite couche de polymère disposée entre la surface du substrat verrier et la couche ou l'empilement de couches est en PMMA (poly(méthacrylate de méthyle)) ou en PDMS (polydiméthylsiloxane).

8. Article selon l'une des revendications précédentes, dans lequel le film organique est choisi parmi un polymère choisi dans le groupe des polyacrylonitrile (PAN), polymethacrylonitrile (PMAN), polycyclooléfine, polyéthylène (PE), polypropylène (PP) ou polyacrylonitrile, polyvinylidene chloride (PVDC) ou encore styrène-butadiène (PSB, ou polysilazanes).

9. Article selon l'une des revendications 1 à 7, dans lequel le film organique est une couche organique sol-gel notamment obtenue par polymérisation d'une solution de TEOS, de MTEOS.

10. Article verrier selon l'une des revendications précédentes, dans lequel l'empilement de couches minces réfléchissant le rayonnement infrarouge comprend au moins une couche métallique choisie parmi l'argent, le cuivre, l'or et leurs alliages.

11. Article verrier selon l'une des revendications précédentes, dans lequel l'empilement de couches minces réfléchissant le rayonnement infrarouge comprend comme couche supérieure une couche diélectrique d'oxyde, de nitrure ou d'oxynitrure, de préférence d'oxyde, sur laquelle est déposé directement le film organique protecteur.

12. Article selon l'une des revendications précédentes dans lequel le substrat est en verre.

13. Article selon la revendication précédente dans lequel la texturation est obtenue par dépolissage de la surface du substrat verrier, notamment par un procédé de dépolissage acide (acid etching), dépolissage basique (basique etching) ou encore par sablage.

14. Article selon l'une des revendications précédentes dans lequel le substrat est en matière plastique, en particulier est en une matière plastique choisie dans le groupe constitué par le PMMA, le polycarbonate, le PET.

15. Article selon la revendication précédente dans lequel la texturation est obtenue par application sur la surface du substrat d'une couche d'un matériau texturé, notamment par embossage ou par auto texturation.

**16.** Article selon l'une des revendications précédentes, dans lequel le Ra de la surface dudit article est inférieur à 50% du Ra de la surface de l'élément de texturation.

**17.** Article selon l'une des revendications précédentes, dans lequel le Ra de la surface de l'article est inférieur à 50 nm.

**Patentansprüche**

**1.** Artikel für Verglasung, umfassend ein Substrat aus Glas oder aus organischem Material, auf dessen Oberfläche abgeschieden werden:

- eine Schicht oder eine Stapelung von Schichten, die dem Artikel eine Funktionalität verleihen, insbesondere Sonnenschutz-, Wärmedämmungs- oder Antikondensationseigenschaften, wobei die Gesamtdicke zwischen 5 Nanometern und 400 Nanometern liegt,
- eine organische Folie, die die Schicht oder die Stapelung von Schichten bedeckt, wobei die Dicke der Polymerfolie zwischen 300 Nanometern und 10 Mikrometern liegt,

**dadurch gekennzeichnet, dass ein** Texturierungselement unter der Schicht oder der Stapelung von Schichten vorhanden ist, wobei die Rauigkeit der Oberfläche des Texturierungselements derart ist, dass:

- der mittlere arithmetische Abstand Ra zwischen 50 nm und 2 Mikrometern, Grenzwerte eingeschlossen, liegt,
- die Basislänge RSm zwischen 5 Mikrometern und 300 Mikrometern, Grenzwerte eingeschlossen, liegt;

wobei die Parameter Ra und RSm entsprechend der internationalen Norm ISO 4287 (1997) definiert sind.

**2.** Artikel nach dem vorstehenden Anspruch, wobei die Brechungsindizes des Substrats und der organischen Folie, gemessen bei 550 nm, im Wesentlichen identisch sind.

**3.** Artikel nach einem der vorstehenden Ansprüche, wobei die organische Folie ein Polymer ist.

**4.** Artikel nach einem der vorstehenden Ansprüche, wobei das Texturierungselement aus einer Texturierung der Oberfläche des Glassubstrats besteht.

**5.** Artikel nach einem der vorstehenden Ansprüche, wobei das Texturierungselement aus einer Schicht eines organischen Materials, insbesondere Polymers, besteht, angeordnet zwischen der Oberfläche des Glassubstrats und der Schicht oder der Stapelung von Schichten, wobei die Oberfläche der organischen Schicht in Kontakt mit der Schicht oder der Stapelung von Schichten texturiert ist.

**6.** Artikel nach einem der vorstehenden Ansprüche, wobei das Texturierungselement aus anorganischem Glas, aus organischem Glas, aus Sol-Gel-Material, aus Polymer oder aus Sinterglas ist.

**7.** Artikel nach dem vorstehenden Anspruch, wobei die zwischen der Oberfläche des Glassubstrats und der Schicht oder der Stapelung von Schichten angeordnete Polymerschicht aus PMMA (Poly(methylmethacrylat)) oder aus PDMS (Polydimethylsiloxan) ist.

**8.** Artikel nach einem der vorstehenden Ansprüche, wobei die organische Folie ausgewählt ist aus einem Polymer aus der Gruppe von Polyacrylnitril (PAN), Polymethacrylnitril (PMAN), Polycycloolefin, Polyethylen (PE), Polypropylen (PP) oder Polyacrylnitril, Polyvinylidenchlorid (PVDC) oder sogar Styrol-Butadien (PSB, oder Polysilazanen).

**9.** Artikel nach einem der Ansprüche 1 bis 7, wobei die organische Folie eine organische Sol-Gel-Schicht ist, insbesondere erhalten durch Polymerisation einer Lösung von TEOS, von MTEOS.

**10.** Glasartikel nach einem der vorstehenden Ansprüche, wobei die Stapelung von Infrarotstrahlung reflektierenden Dünnschichten mindestens eine Metallschicht, ausgewählt aus Silber, Kupfer, Gold und deren Legierungen, umfasst.

**11.** Glasartikel nach einem der vorstehenden Ansprüche, wobei die Stapelung Infrarotstrahlung reflektierender Dünnschichten als obere Schicht eine dielektrische Oxid-, Nitrid- oder Oxynitridschicht, vorzugsweise Oxidschicht, umfasst, auf der die organische Schutzfolie direkt abgeschieden ist.

# EP 3 717 433 B1

12. Artikel nach einem der vorstehenden Ansprüche, wobei das Substrat aus Glas ist.

13. Artikel nach dem vorstehenden Anspruch, wobei die Texturierung durch Mattieren der Oberfläche des Glassubstrats erhalten wird, insbesondere durch ein saures Mattierungsverfahren (Säureätzen), basisches Mattierungsverfahren (basisches Ätzen) oder sogar durch Sandstrahlung.

14. Artikel nach einem der vorstehenden Ansprüche, wobei das Substrat aus Kunststoffmaterial ist, besonders ein Kunststoffmaterial ausgewählt aus der Gruppe bestehend aus PMMA, Polycarbonat, PET ist.

15. Artikel nach dem vorstehenden Anspruch, wobei die Texturierung durch Auftragung einer Schicht eines texturierten Materials auf die Oberfläche des Substrats erhalten wird, insbesondere durch Prägung oder durch Autotexturierung.

16. Artikel nach einem der vorstehenden Ansprüche, wobei der Ra der Oberfläche des Artikels weniger als 50 % des Ra der Oberfläche des Texturierungselements beträgt.

17. Artikel nach einem der vorstehenden Ansprüche, wobei der Ra der Oberfläche des Artikels weniger als 50 nm beträgt.

**Claims**

1. A glazing article, comprising a substrate made of glass or made of organic substance, on the surface of which are deposited:

  - a layer or a stack of layers conferring, on said article, a functionality, in particular solar protection, thermal insulation or anticondensation properties, with a total thickness of between 5 nanometers and 400 nanometers,
  - an organic film covering said layer or said stack of layers, the thickness of the polymer film being between 300 nanometers and 10 micrometers, **characterized in that** a texturing element is present under said layer or said stack of layers, the roughness of the surface of the texturing element being such that:
  - the arithmetic mean deviation $R_a$ is between 50 nm and 2 micrometers, limits included,
  - the base length $R_{Sm}$ is between 5 micrometers and 300 micrometers, limits included,

  the parameters $R_a$ and $R_{Sm}$ being defined in accordance with the international standard ISO4287 (1997).

2. The article as claimed in the preceding claim, in which the refractive indices of the substrate and of the organic film, measured at 550 nm, are substantially identical.

3. The article as claimed in either of the preceding claims, in which the organic film is a polymer.

4. The article as claimed in one of the preceding claims, in which said texturing element consists of a texturing of the surface of the glass substrate.

5. The article as claimed in one of the preceding claims, in which said texturing element consists of a layer of an organic material, in particular polymer material, positioned between the surface of the glass substrate and the layer or the stack of layers, the surface of said organic layer in contact with said layer or with the stack of layers being textured.

6. The article as claimed in one of the preceding claims, in which said texturing element is made of inorganic glass, of organic glass, of sol-gel material, of polymer or of sintered glass.

7. The article as claimed in the preceding claim, in which said polymer layer positioned between the surface of the glass substrate and the layer or the stack of layers is made of PMMA (poly(methyl methacrylate)) or of PDMS (polydimethylsiloxane).

8. The article as claimed in one of the preceding claims, in which the organic film is chosen from a polymer chosen from the group of polyacrylonitrile (PAN), polymethacrylonitrile (PMAN), polycycloolefin, polyethylene (PE), polypropylene (PP) or polyacrylonitrile, polyvinylidene chloride (PVDC) or also styrene-butadiene (PSB), or polysilazanes.

9. The article as claimed in one of claims 1 to 7, in which the organic film is an organic sol-gel layer obtained in particular by polymerization of a TEOS or MTEOS solution.

10. The glass article as claimed in one of the preceding claims, in which the stack of thin layers reflecting infrared radiation comprises at least one metal layer chosen from silver, copper, gold and their alloys.

11. The glass article as claimed in one of the preceding claims, in which the stack of thin layers reflecting infrared radiation comprises, as upper layer, a dielectric layer of oxide, nitride or oxynitride, preferably of oxide, on which the protective organic film is directly deposited.

12. The article as claimed in one of the preceding claims, in which the substrate is made of glass.

13. The article as claimed in the preceding claim, in which the texturing is obtained by etching the surface of the glass substrate, in particular by a process of acid etching or basic etching or also by sandblasting.

14. The article as claimed in one of the preceding claims, in which the substrate is made of plastic substance, in particular is made of a plastic substance chosen from the group consisting of PMMA, polycarbonate and PET.

15. The article as claimed in the preceding claim, in which the texturing is obtained by application, to the surface of the substrate, of a layer of a textured material, in particular by embossing or by selftexturing.

16. The article as claimed in one of the preceding claims, in which the $R_a$ of the surface of said article is less than 50% of the $R_a$ of the surface of the texturing element.

17. The article as claimed in one of the preceding claims, in which the $R_a$ of the surface of the article is less than 50 nm.

## FIG. 1

1b

1a

## RÉFÉRENCES CITÉES DANS LA DESCRIPTION

**Documents brevets cités dans la description**

- WO 2013089185 A
- EP 2685294 A
- FR 2414114

- WO 2016097599 A
- WO 2017103465 A
- WO 2007101964 A1

**Littérature non-brevet citée dans la description**

- *Les techniques de l'ingénieur, Vitrage à isolation thermique renforcée, C3635,* 2004

- *Les techniques de l'ingénieur, Vitrage à isolation thermique renforcée,* 2004, C3635